# FASCICULE DE BREVET EUROPEEN

(11) **EP 4 574 896 B1**
(45) Date de publication et mention de la délivrance du brevet: **08.07.2026**
(21) Numéro de dépôt: 24222470.7
(22) Date de dépôt: 20.12.2024
(51) Int. Cl.: C08L 29/14, C08L 51/00, C04B 26/04, C09D 151/00, C09D 129/14, C08K 3/26, C08F 116/38, C04B 111/00

(54) **LIANT CLAIR COMPRENANT DES PARTICULES DE POLYBUTYRAL DE VINYLE (PVB) PLASTIFIE RECYCLE**
KLARES BINDEMITTEL MIT RECYCELTEN PLASTIFIZIERTEN POLYVINYLBUTYRALPARTIKELN
CLEAR BINDER COMPRISING RECYCLED PLASTICIZED POLYVINYL BUTYRAL (PVB) PARTICLES

(30) Priorité: 21.12.2023 FR 2314897
(43) Date de publication de la demande: 25.06.2025
(73) Titulaire: Vinci Construction, 92000 Nanterre (FR)
(72) Inventeur: LEBARBE, Thomas, 33980 Audenge (FR); PARISOT, Juliette, 33200 Bordeaux (FR)
(74) Mandataire: Regimbeau

(56) Documents cités:
- WO-A1-2023/139123
- US-A1- 2011 034 618
- SHARK SOLUTIONS: "Blind Comparison of Binder Systems using SharkDispersions(TM) in Paint Formulations", 20 April 2021 (2021-04-20), pages 1 - 10, XP093177192, Retrieved from the Internet <URL:https://www.fabervanderende.com/upload_directory/files/2021-04-20%20Shark%20Solutions%20Blind%20Test%20of%20Wall%20Paint%20Binders%20%20EU.pdf> [retrieved on 20240620]

## Description

### DOMAINE DE L'INVENTION

La présente invention concerne le domaine des revêtements routiers et d'aménagement urbain, en particulier des revêtements clairs ou colorés aux liants clairs. Plus particulièrement, la présente invention concerne un liant clair comprenant des particules de PVB plastifié recyclé et des particules de polymère vinylique autre que le PVB. La présente invention porte également sur les enrobés clairs routiers ou d'aménagement urbain comprenant un tel liant ainsi que sur les revêtements routiers et les aménagements urbains comprenant les enrobés de l'invention.

### ARRIERE PLAN TECHNOLOGIQUE

Parmi les différents matériaux utilisés pour la construction des routes, des chaussées et des revêtements pour l'aménagement urbain, on retrouve principalement les enrobés, qui servent notamment à la fabrication de couches de roulement ou de couches d'assise. Les propriétés des enrobés, telles que les propriétés mécaniques, thermiques, acoustiques, l'étanchéité du revêtement résultant, sont modulées par la nature des particules solides et du liant.

Par définition, un enrobé est obtenu par mélange de particules solides et d'un liant. Ils sont ensuite appliqués par épandage et compactés pour obtenir des revêtements routiers. Les enrobés hydrocarbonés à base de bitume (enrobé bitumineux) sont parmi les plus utilisés pour ces applications et responsables de la couleur noire des routes.

La valeur esthétique des revêtements est généralement associée à leur clarté. Cependant, les enrobés bitumineux sont de couleur noire du fait de la présence d'asphaltènes dans la composition du bitume. Les enrobés clairs sont généralement produits en utilisant un liant de synthèse qui possède des caractéristiques mécaniques et rhéologiques proches d'un bitume tout en étant clair et translucide en film mince. Les liants clairs de l'art antérieur sont généralement constitués d'un mélange d'huiles pétrolières, de résines hydrocarbonées pétrolières et de polymères. Les liants clairs connus de l'homme de l'art qui comprennent des huiles et des résines peuvent présenter une couleur orangée/brune qui modifie la couleur naturelle des granulats.

Les liants clairs connus sont généralement utilisés dans des techniques d'enrobage « à chaud » des particules solides, c'est-à-dire à des températures allant typiquement de 150°C à 200°C, notamment de 180°C à 200°C. La fabrication à ces températures permet une bonne fluidité de la composition et une maniabilité adaptée à l'application mécanisée ou manuelle sur chantier. Cependant, le revêtement appliqué sur chantier est généralement à une température supérieure à 140-150°C ce qui a pour conséquence de générer d'importantes émissions de fumées. En abaissant la température de fabrication, et donc d'application, de ces revêtements clairs, des problèmes importants de maniabilité peuvent être observés.

La fabrication à froid des enrobés clairs, c'est-à-dire à température ambiante, allant typiquement de 15°C à 40°C, est peu répandue. Une telle technique à froid est pourtant avantageuse en termes d'énergie, de coûts et de mise en oeuvre.

Ainsi, un besoin demeure pour la mise à disposition d'enrobés clairs pouvant être obtenus par des techniques « à froid », avec notamment un impact environnemental moindre, et possédant des caractéristiques mécaniques et rhéologiques aussi satisfaisantes que celles des enrobés bitumineux. *Blind Comparison of Binder Systems using SharkDispersions^{™} in Paint Formulations* décrit une formulation de peinture murale architecturale d'intérieur composée entre autres de particules solides de dioxyde de titane avec un système de liant clair composé d'une dispersion aqueuse de particules de polybutyral de vinyle (PVB) plastifié recyclé comprenant un tensioactif anionique et des particules comprenant un polymère vinylique autre que le PVB étant un polymère styrène-acrylique ou acrylique.

### RESUME DE L'INVENTION

L'invention porte sur un liant clair comprenant de l'eau, un tensioactif anionique, des particules à base de polybutyral de vinyle (PVB) plastifié recyclé et des particules comprenant un polymère vinylique autre que le PVB, au moins une partie des particules comprenant un polymère vinylique autre que le PVB étant constituées d'au moins deux polymères ayant des températures de transition vitreuse (Tg) distinctes, de sorte qu'un gradient positif de Tg est observé de la surface des particules vers le centre des particules.

L'invention concerne également l'utilisation d'une dispersion aqueuse comprenant un tensioactif anionique, des particules à base de polybutyral de vinyle plastifié recyclé et des particules comprenant un polymère vinylique autre que le PVB, pour la préparation d'un liant destiné à la fabrication d'un enrobé routier ou d'aménagement urbain, au moins une partie des particules comprenant un polymère vinylique autre que le PVB étant constituées d'au moins deux polymères ayant des températures de transition vitreuse (Tg) distinctes, de sorte qu'un gradient positif de Tg est observé de la surface des particules vers le centre des particules.

En outre, l'invention concerne des enrobés clairs routiers ou d'aménagement urbain comprenant des particules solides et un liant résiduel issu du liant clair selon l'invention.

Enfin, l'invention concerne un revêtement routier ou d'aménagement urbain comprenant une ou plusieurs couches d'enrobés clairs selon l'invention.

D'autres aspects de l'invention sont tels que décrits ci-après.

### DESCRIPTION DETAILLEE

De manière surprenante, les inventeurs ont découvert que l'utilisation d'un liant clair comprenant de l'eau, un tensioactif anionique, des particules à base de polybutyral de vinyle (PVB) plastifié recyclé et des particules comprenant un polymère vinylique autre que le PVB permet la préparation, notamment à froid, d'enrobés clairs. De manière avantageuse, les enrobés préparés répondent aux exigences requises en termes de propriétés mécaniques pour les couches de roulement et les aménagements urbains et permettent de s'affranchir des inconvénients précités.

Le liant clair présente une faible température de filmification. Les enrobés préparés au moyen d'un tel liant clair présentent un compromis optimal entre rigidité et souplesse ainsi que des propriétés de tenue à l'eau adaptées à l'usage auquel ils sont destinés.

Par ailleurs, un tel liant a l'avantage d'être translucide et permet donc de réaliser des revêtements dont la teinte est celle des matériaux granulaires qui les constituent. Les enrobés comprenant ce liant sont donc particulièrement adaptés aux zones piétonnes et cyclables peu circulées, aux voies forestières, aux voies sur berges et aux trottoirs. Ils peuvent contribuer à la sécurité de ces espaces par une plus grande lisibilité et une différenciation visuelle des différents aménagements.

De plus, l'utilisation de particules à base de polybutyral de vinyle plastifié recyclé dans le liant permet de diminuer l'empreinte carbone de l'enrobé résultant, du fait de l'utilisation de matière recyclée.

L'expression « comprend un » s'entend « comprend au moins un » ou encore « comprend un ou plusieurs ». Par exemple, lorsqu'il est indiqué que le liant comprend un tensioactif anionique, il est entendu que le liant comprend un ou plusieurs tensioactifs anioniques.

Le terme « liant clair » désigne un liant qui est généralement incolore ou de couleur claire (ex. blanche ou beige).

Le terme « liant résiduel » désigne le liant compris dans les enrobés après l'enrobage et retrait de l'eau (et/ou des solvants le cas échéant). Autrement dit, le liant résiduel est anhydre.

Le terme « tensioactif anionique » désigne un produit tensioactif, c'est-à-dire capable de modifier la tension superficielle entre deux surfaces, s'ionisant en solutions aqueuse pour fournir des anions et responsables de l'activité de surface.

Le terme « température de transition vitreuse » (notée Tg) désigne la température en dessous de laquelle les propriétés physiques des matériaux amorphes varient d'un état caoutchouteux à un état vitreux. Ainsi, la Tg est également la température en dessous de laquelle les molécules ont peu de mobilité relative. La température de transition vitreuse est typiquement mesurée au moyen des essais suivants :
- DSC (Differential Scanning Calorimetry ou Calorimétrie Différentielle à balayage)
- DMA (Dynamic Mechanical Analysis ou Analyse mécanique dynamique)
- TMA (ThermoMechanical Analysis ou Analyse thermomécanique)

### Liant clair

Le liant clair selon l'invention comprend :
- de l'eau,
- un tensioactif anionique,
- des particules à base de polybutyral vinyle (PVB) plastifié recyclé, et
- des particules comprenant un polymère vinylique autre que le PVB.

Dans certains modes de réalisation, le liant clair comprend une ou plusieurs, voire l'ensemble, des caractéristiques suivantes :
- de 5% à 50% en poids de particules à base de PVB plastifié recyclé, et/ou
- de 5% à 50% en poids de particules comprenant un polymère vinylique autre que le PVB ; et/ou
- de 0,2 à 5% en poids d'un ou plusieurs tensioactifs anioniques, par rapport au poids total du liant.

Le liant clair comprend notamment de 30% à 70%, en particulier de 40% à 60%, plus particulièrement de 45% à 55 %, en poids de matière sèche par rapport au poids total du liant. Le liant clair selon l'invention est notamment dépourvu de bitume.

Le liant clair peut par ailleurs comprendre des additifs.

Dans le liant clair, les particules à base de PVB plastifié recyclé ont un caractère caoutchouteux et les particules comprenant un polymère vinylique autre que le PVB ont un caractère plus rigide. L'utilisation d'un tel liant permet ainsi d'obtenir un liant résiduel conférant un bon compromis rigidité/souplesse à la couche d'enrobés comprenant un tel liant.

Le liant clair peut notamment être obtenu par un procédé comprenant le mélange d'une dispersion aqueuse de particules à base de PVB avec une dispersion aqueuse de particules comprenant un polymère vinylique autre que le PVB. Des additifs conventionnellement utilisés dans la préparation de liants peuvent être ajoutés. Le mélange des deux dispersions aqueuses peut être effectué en amont de ou simultanément à l'étape de mélange du liant avec les particules solides lors de la préparation des enrobés clairs.

Les composants du liant clair sont tels que définis ci-après.

### La dispersion aqueuse de particules à base de PVB

La dispersion aqueuse de particules de PVB utile pour la préparation du liant clair comprend des particules à base de PVB plastifié recyclé, un tensioactif anionique et de l'eau.

La dispersion aqueuse de particules de PVB comprend typiquement de 20 à 60% en poids sec de particules à base PVB plastifié recyclé par rapport au poids total de la dispersion, préférentiellement de 40 à 55 %, plus préférentiellement de 45 à 50 %.

Typiquement, la dispersion aqueuse de particules à base de PVB comprend au moins 0,2%, de préférence de 0,2% à 5 %, en poids d'un ou plusieurs tensioactif(s) anionique(s) par rapport au poids total de ladite dispersion.

Le liant préparé à partir de la dispersion aqueuse de particules à base de PVB comprend donc les particules à base de PVB plastifié recyclé et un ou plusieurs tensioactifs anioniques, tels que décrits ci-après.

Un exemple de dispersion aqueuse de particules de PVB utile dans le cadre de la présente invention inclut la dispersion Shark Dispersion SX2^{™} commercialisée par la société Shark Solutions.

### Les particules à base de polybutyral de vinyle (PVB)

Les particules à base de PVB plastifié recyclé sont constituées majoritairement de PVB et d'un ou plusieurs plastifiants.

Le polybutyral de vinyle (PVB) est principalement utilisé comme matière première (feuille de laminage) dans la préparation de verre feuilleté de sécurité pour les pare-brises des voitures et les bâtiments. Dans ces applications, le PVB contient généralement un ou plusieurs plastifiants.

L'utilisation de particules à base de PVB plastifié recyclé permet de diminuer le coût et l'empreinte carbone du liant, et donc des enrobés préparés à partir de de ce liant. Néanmoins, il sera compris que la présente invention peut être mise en œuvre à partir de particules de PVB natif (non recyclé), de préférence plastifié, mais présentera un intérêt moindre en termes de coût et d'empreinte carbone.

Le PVB plastifié recyclé utile dans le cadre de l'invention est de préférence obtenu par isolation du PVB contenu dans les déchets de verre feuilleté provenant des pare-brises et des vitrages des bâtiments. Le procédé d'isolation du PVB peut être tel que décrit dans les demandes US 2009/230224 et US 2018/371202.

Le PVB plastifié recyclé contient donc du PVB et un ou des plastifiants. Les plastifiants contenus dans les particules de PVB permettraient de stabiliser la dispersion aqueuse de particules à base de PVB. Typiquement, il s'agit d'un plastifiant communément présent dans le PVB utilisé pour la fabrication du verre feuilleté de sécurité et connu de l'homme du métier, tel que les diesters d'acides carboxyliques du tri- ou du tétraéthylène glycol, le butylricinoléate, l'huile de ricin, les adipates mixtes d'alkyle et d'alkylaryle (ex. adipate de benzyle ou d'octyle), ou d'un mélange de ceux-ci.

Typiquement, le PVB utile dans le cadre de l'invention peut être tout PVB utilisé pour la préparation de verre feuilleté de sécurité, c'est-à-dire quel que soit sa masse molaire et sa teneur en groupements hydroxyles et en groupements butyrals et l'enchainement de ces groupes au sein du polymère.

Les particules à base de PVB plastifié recyclé ont une teneur totale en plastifiant(s) allant typiquement de 5 % à 50%, préférentiellement de 15% à 30%, en poids par rapport au poids total des particules.

Les particules à base de PVB plastifié recyclé ont une teneur en PVB allant typiquement de 50% à 95%, préférentiellement de 70% à 85%, plus préférentiellement de 75% à 80%, en poids par rapport au poids total des particules.

Dans certains modes de réalisation, la taille des particules à base de PVB plastifié recyclé est comprise dans une gamme allant de 50 nm à 1000 nm, préférentiellement de 100 nm à 400 nm.

Les particules à base de PVB possèdent une température de transition vitreuse (Tg) allant typiquement de -10°C à 80°C. Lorsque les particules sont à base de PVB non recyclé (dit natif), la Tg est notamment comprise dans une gamme allant de 60°C à 80°C. Lorsque les particules sont à base de PVB plastifié recyclé, la Tg est notamment comprise dans une gamme allant de -10°C à 40°C, en particulier de 0°C à 30°C.

La présence de particules à base de PVB plastifié recyclé permet de diminuer la température de filmification du liant. Une faible température de filmification assure une bonne cohésion de l'enrobé résultant. La température de filmification du liant selon l'invention, obtenu à partir de la dispersion aqueuse décrite ci-dessus, est notamment comprise dans une gamme allant de 0°C à 10°C, de préférence de 0°C à 5°C, encore plus préférentiellement inférieure de 0°C à 1°C. En particulier, cette température de filmification est égale à 0°C.

### Le tensioactif anionique

Le tensioactif anionique permet de disperser efficacement les particules à base de PVB et d'améliorer la stabilité de la dispersion aqueuse de particules à base de PVB.

Le tensioactif anionique est typiquement sélectionné dans le groupe constitué par les carboxylates d'acides gras tel que l'oléate de potassium, les sulfates tel que le dodécylsulfate de sodium, les sulfonates tels que les alkylbenzène sulfonates de sodium et les alpha-oléfines sulfonates, les phosphates, les sulfosuccinates, les phospholipides et leurs mélanges.

### La dispersion aqueuse de particules comprenant un polymère vinylique autre que le PVB

La dispersion aqueuse de particules de polymère vinylique autre que le PVB utile pour la préparation du liant clair comprend des particules comprenant un polymère vinylique autre que le PVB, de l'eau et un tensioactif anionique.

La dispersion aqueuse de particules comprenant un polymère vinylique autre que le PVB comprend typiquement de 30 à 70% en poids sec de particules comprenant un ou plusieurs polymères vinyliques autre que le PVB par rapport au poids total de la dispersion, préférentiellement de 40 à 60 %, plus préférentiellement de 45 à 55 %.

Typiquement, la dispersion aqueuse de particules comprenant un polymère vinylique autre que le PVB comprend au moins 0,2%, de préférence de 0,2% à 5 %, en poids d'un ou plusieurs tensioactif(s) anioniques par rapport au poids total de ladite dispersion.

Le liant préparé à partir de la dispersion aqueuse de particules comprenant un polymère vinylique autre que le PVB comprend donc les particules comprenant un polymère vinylique autre que le PVB et un tensioactif anionique, tels que décrits ci-après.

### Les particules comprenant un polymère vinylique autre que le PVB

Il est entendu que les particules comprenant un polymère vinylique autre que le PVB peuvent être constituées d'un seul polymère vinylique ou d'un mélange de plusieurs polymères vinyliques, au moins une partie de ces particules étant constituées de deux ou plus polymères. Les polymères vinyliques désignent, dans le cadre de la présente invention, les polymères obtenus par polymérisation de monomères vinyliques et/ou diéniques, autres que le polybutyral de vinyle. Ces monomères vinyliques et/ou diéniques peuvent notamment être des esters comprenant au moins une instauration oléfinique polymérisable, des monomères éthyléniquement insaturés porteur d'au moins une fonction acide et/ou anhydride carboxylique et de leurs combinaisons.

En particulier, ces monomères vinyliques et/ou diéniques sont choisis parmi le styrène et ses dérivés (tels que les vinyltoluènes (ortho, meta, para), α-méthylstyrène, isopropylstyrène, *tert*butylstyrène, para-butylstyrène, para-décylstyrène, para-chloro-styrène), le butadiène, l'isoprène, les esters (méth)acryliques, les nitriles (tel que le (meth)acrylonitrile), les esters vinyliques (tels que l'acétate de vinyle, le butyrate de vinyle, le caprolate de vinyle, et le pivalate de vinyle), l'acide (méth)acrylique, l'acide itaconique, l'acide fumarique, l'acide maléique, l'acide crotonique, l'acide isocrotonique, l'acide vinylbenzoïque et leurs combinaisons. La formulation (méth)acryl* désigne l'acryl* et le méthacryl*, * désignant le suffixe -ate ou -ique.

Les esters (méth)acryliques sont préférentiellement sélectionnés parmi les (méth)acrylates d'alkyle en C1-10 linéaires, tel que le (méth)acrylate de méthyle, le (meth)acrylate d'éthyle ou le (méth)acrylate de butyle, les (méth)acrylates d'alkyle en C3-10 ramifiés, l'acrylate de 2-éthylhexyle et leurs combinaisons.

De préférence, les monomères sont choisis parmi le styrène et les esters (méth)acryliques tels que les (méth)acrylates d'alkyle en C1-10 linéaires, les (méth)acrylates d'alkyle en C3-10 ramifiés.

Dans certains modes de réalisation, la taille des particules comprenant un polymère vinylique autre que le PVB est comprise dans une gamme allant de 50 nm à 1000nm, préférentiellement de 100 nm à 400 nm.

Les particules comprenant un polymère vinylique autre que le PVB possèdent une ou plusieurs températures de transition vitreuse (Tg), chacune allant typiquement de -100°C à 100°C. Au moins une partie des particules comprennent donc deux ou plus températures de transition vitreuse (Tg).

Selon l'invention, au moins une partie, notamment au moins 50%, de préférence la totalité, des particules comprenant un polymère vinylique autre que le PVB sont constituées de deux polymères vinyliques autre que le PVB ou plus, chaque polymère ayant une Tg distincte. Dans un exemple de ce mode de réalisation, la Tg de chaque polymère augmente lorsqu'on va de la surface au centre de la particule, de sorte qu'un gradient positif de Tg est observé de la surface des particules vers le centre des particules.

Dans un mode de réalisation préféré, les particules constituées de deux polymères vinyliques autre que le PVB ou plus correspondent à des particules π1 telles que décrites dans la demande FR 3 095 665, à la page 3, lignes 15-21, de la page 4, ligne 19 à la page 5, ligne 10 et de la page 5, ligne 10 à la page 7, ligne 13. Ces particules π1 sont structurées de sorte qu'un gradient positif de Tg est observé de la surface des particules vers le centre des particules. Le polymère ayant la température de transition vitreuse Tg₁ la plus élevée, supérieure ou égale à 10°C, se trouve au centre de la particule π1et le polymère ayant la température de transition vitreuse Tg₂ la plus faible, inférieure ou égale à 0°C, se trouve en surface de la particule π1.

Tg₁ est notamment comprise dans une gamme allant de 10°C à 100°C, en particulier de 30°C à 100°C, et préférentiellement de 50°C à 100°C. Tg₂ est notamment comprise dans une gamme allant de 0°C à -100°C, en particulier de 0°C à -50°C, et préférentiellement de 0°C à - 20°C.

En particulier, les particules π1 à gradient de Tg peuvent comprendre un polymère P1 ayant une Tg₁ au centre de la particule entouré d'une ou plusieurs couches intermédiaire(s) de polymère comprise(s) entre le polymère P1 et une couche de polymère P2 ayant une Tg₂ en surface de la particule, les couches intermédiaires ayant des Tg comprises entre Tg1 et Tg2, de sorte que la valeur de la Tg de chaque couche de polymère augmente lorsque l'on va de la couche de P2 vers la couche de P1. De manière préférée, les particules π1 sont structurées sous la forme de particules cœur/écorce, comprenant un polymère P1 en leur centre, présentant une Tg₁ telle que définie ci-dessus, entouré d'une enveloppe constituée d'un polymère P2 présentant une Tg₂ telle que définie ci-dessus. Le polymère P1 est notamment un ester méthacrylique et le polymère P2 est notamment le styrène ou un de ses dérivés, en particulier le styrène.

Le liant clair peut comprendre des particules comprenant un polymère vinylique autre que le PVB qui sont toutes identiques ou de différentes natures. On entend par là que le liant peut comprendre des particules constituées d'un mélange de polymères vinyliques autre que le PVB, un mélange de particules constituées d'un mélange de polymères vinyliques autre que le PVB ou un mélange de particules constituées d'un seul polymère vinylique autre que le PVB et de particules constituées d'un mélange de polymères vinyliques autre que le PVB. Par exemple, le liant peut comprendre des particules π1 en mélange avec d'autres particules constituées d'un seul polymère vinylique autre que le PVB possédant une seule Tg.

Dans un mode de réalisation préféré, dans le liant, les particules comprenant un polymère vinylique autre que le PVB sont toutes identiques. Il s'agit notamment de particules π1 telles que décrites ci-dessus, en particulier des particules π1 sous la forme de particules cœur/écorce, comprenant un polymère P1 en leur centre, entouré d'une enveloppe constituée d'un polymère P2, tels que décrits ci-dessus.

La présence de particules de polymères vinyliques autres que le PVB, en particulier les particules π1, améliore la dureté du film de liant. Le liant résiduel présente ainsi des valeurs de modules élevées, étant moins susceptible à la fracture, tout en restant rigide et adapté aux revêtements urbains ou routiers envisagés. Ces valeurs de modules varient peu en fonction de la température extérieure, cette dernière allant typiquement de -40°C à 60°C. Autrement dit, les propriétés mécaniques des enrobés comprenant le liant obtenu à partir de la dispersion aqueuse telle que décrite ci-dessus restent stables sur une large gamme de températures extérieures à laquelle les enrobés peuvent être exposés au cours de l'année, en hiver comme en été.

### Les enrobés clairs

L'invention concerne également des enrobés routiers ou d'aménagement urbain obtenus par mélange de particules solides et d'un liant clair tel que décrit ci-dessus.

### Les particules solides

Le terme "particules solides", désigne toutes particules solides utilisables pour la réalisation de produits routiers et d'aménagement selon l'invention, notamment pour la construction routière et l'aménagement urbain en revêtements clairs. Des exemples de particules solides incluent les particules solides minérales telles que les granulats minéraux naturels (gravillons, sable, fines), par exemple issus de carrière ou de gravière, les produits de recyclage des revêtements clairs tels que les agrégats d'enrobés clairs, par exemple résultant du recyclage des matériaux récupérés lors de la réfection des revêtements clairs ou des surplus d'usines d'enrobés clairs, les rebuts de fabrication, les granulats provenant du recyclage de matériaux routiers y compris les bétons, les laitiers en particulier les scories, les schistes en particulier la bauxite ou le corindon, les poudrettes de caoutchouc par exemple provenant du recyclage des pneus, les granulats artificiels de toute origine et les granulats provenant par exemple des mâchefers d'incinération des ordures ménagères (MIOM), ainsi que leurs mélanges en toutes proportions.

Les particules solides, en particulier les particules solides minérales, par exemple les granulats minéraux naturels, comprennent typiquement des éléments inférieurs à 0,063 mm (filler ou fines), du sable dont les éléments sont compris entre 0,063 mm et 2 mm et des gravillons ou granulats, dont les éléments ont des dimensions comprises entre 2 mm et 6 mm et supérieures à 6 mm.

La taille des particules solides, en particulier des particules solides minérales, par exemple les granulats minéraux, est mesurée par les essais décrits dans la norme NF EN 933-2 (07/2020). Les « particules solides minérales » sont également désignées par les termes « fraction minérale 0/D ». Cette fraction minérale 0/D peut être séparée en deux granulométries : la fraction minérale 0/d et la fraction minérale d/D. Les éléments les plus fins (la fraction minérale 0/d) sont ceux compris dans la plage comprise entre 0 et un diamètre maximal que l'on peut fixer entre 2 et 6 mm (de 0/2 à 0/6), avantageusement entre 2 et 4 mm. Les autres éléments (diamètre minimal supérieur à 2, 3, 4, 5 ou 6 mm ; et environ jusqu'à 31,5 mm) constituent la fraction minérale d/D.

Avantageusement, les enrobés de l'invention sont de couleur claire. Ainsi, les granulats utilisés dans les enrobés de l'invention ont de préférence une luminescence L* importante, typiquement supérieure à 50. Cette propriété confère aux revêtements une visibilité améliorée de jour comme de nuit ainsi qu'une grande clarté. La luminescence est typiquement calculée selon les normes NF EN 11664-1, NF EN 11664-2 et NF 11664-4, du 07-01-2011.

### Les additifs

Les enrobés selon l'invention peuvent comprendre un additif, soit ajouté aux particules solides avant mélange au liant, soit présent dans le liant ou ajouté au liant avant mélange aux particules solides, soit lors du mélange des particules solides et du liant. Cet additif peut être employé à des fins mécaniques, à des fins rhéologiques, à des fins d'adhésion, à des fins esthétiques, notamment pour un changement de couleur des produits routiers finaux.

Lorsque l'additif est présent dans le liant, il peut être présent dans la dispersion aqueuse de particules à base de PVB, dans la dispersion aqueuse de particules comprenant un polymère vinylique autre que le PVB et/ou être ajouté dans le liant, typiquement après le mélange des deux dispersions aqueuses ou simultanément à celui-ci.

Par exemple, l'additif peut être choisi parmi les plastifiants, les tensioactifs non-ioniques, les dopes d'adhésion, les agents colorants, les agents anti-mousse, les agents viscosifiants, les agents antimicrobiens, les dispersions de carbonate de calcium, les fibres et une combinaison de ceux-ci.

Le liant clair peut notamment comprendre un ou plusieurs additifs communément utilisés dans la préparation de liants pour enrobés routiers.

### Plastifiants

Lorsque les particules sont des particules de PVB natif, un plastifiant est de préférence ajouté au liant clair. Ce plastifiant est notamment choisi parmi les diesters d'acides carboxyliques du tri- ou du tétraéthylène glycol, le butylricinoléate, l'huile de ricin, les adipates mixtes d'alkyle et d'alkylaryle (adipate de benzyle ou d'octyle) ou un mélange de ceux-ci.

Lorsque les particules sont à base d'un PVB plastifié recyclé, qui comprend donc du plastifiant, typiquement, aucun plastifiant supplémentaire n'est ajouté au liant clair.

Le liant clair comprend de préférence de 1% à 25% en poids d'un ou plusieurs plastifiants (compris dans les particules de PVB et/ou ajouté dans la dispersion ou le liant) par rapport au poids total du liant, préférentiellement de 5% à 12 %.

### Tensioactif non-ionique

Le liant peut éventuellement comprendre un tensioactif non-ionique, qui ne s'ionise pas dans l'eau, en combinaison avec un ou plusieurs tensioactifs anioniques tels que définis ci-dessus. Dans ce cas, le liant peut comprendre de 0,2 à 5%, et de préférence de 0,2 à 0,5 % en poids d'un ou plusieurs tensioactif(s) anionique(s) par rapport au poids total du liant. Ce tensioactif non-ionique est par exemple sélectionné parmi les esters de glycol comme le stéarate d'éthylèneglycol, les esters de glycérol, les esters de sorbitane (Tween^{®}), les esters de polyoxyéthylèneglycol, les éthers d'alcool gras, les alcanolamides et leurs mélanges.

### Agents antimicrobiens

Les agents antimicrobiens incluent des agents anti-bactériens et antifongiques et des agents combinant ces propriétés.

De tels agents permettent d'empêcher la prolifération d'agents pathogènes (bactéries, champignons, etc..) au sein de la dispersion aqueuse lors de son stockage. Ils servent principalement de conservateurs.

L'agent antimicrobien peut être tout agent antimicrobien connus de l'homme du métier. Il est par exemple sélectionné parmi le benzoisothiazolinone (BIT), le méthylisothiazolinone (MIT), leurs dérivés et les mélanges de ceux-ci.

### Dopes d'adhésion

Les dopes d'adhésion permettent d'améliorer l'affinité réciproque entre la composition de liant et les granulats et en assurent la pérennité.

Des exemples de dopes utiles dans le cadre de la présente invention incluent de manière non limitative des composés tensioactifs azotés dérivés des acides gras (amines, amidoamines, imidazolines), d'acides gras ou d'acides gras polymérisés, d'esters phosphate, d'organosilanes, etc...

### Agents colorants

Les agents colorants peuvent être des pigments minéraux ou des colorants organiques. Les pigments sont sélectionnés suivant la teinte, la couleur souhaitée pour le revêtement. Par exemple, des oxydes métalliques tels que des oxydes de fer, des oxydes de chrome, des oxydes de cobalt, des oxydes de titane peuvent être utilisés pour obtenir les couleurs rouge, jaune, gris, vert, bleu ou blanc.

Les agents colorants peuvent être ajoutés, indifféremment dans la composition de liant ou lors de la fabrication de l'enrobé en mélange avec les particules solides minérales (fillers, sables et granulats).

### Agents Viscosifiants

Les agents viscosifiants sont choisis parmi les viscosifiants inorganiques et les viscosifiants organiques, tel que des argiles, les silices fumées, les viscosifiants cellulosiques et les viscosifiants synthétiques de type associatif (tels que HEUR (Uréthane oxyde d'Ethylène modifiés hydrophobiqument, Hydrophobically modified Ethylene oxyde URethane selon l'acronyme anglo-saxon approprié),HMPE (Polyéthylene à haut module, High Modulus PolyEthylene selon l'acronyme anglo-saxon) ou HASE) ou non associatif (ASE).

L'acronyme « HASE », désigne une émulsion alcali soluble modifiée hydrophobiquement, comprenant un copolymère carboxylé à base :
- (a1) d'au moins d'un monomère anionique comprenant au moins une insaturation oléfinique polymérisable, de préférence un monomère anionique comprenant au moins une insaturation oléfinique polymérisable et au moins une fonction acide carboxylique,
- (a2) d'au moins un ester d'un composé dérivé d'un acide carboxylique comprenant au moins une insaturation oléfinique polymérisable, et
- (a3) d'au moins un monomère hydrophobe associatif.

L'acronyme « ASE » désigne une émulsion alcali soluble comprenant un copolymère carboxylé à base :
- (a1) d'au moins d'un monomère anionique comprenant au moins une insaturation oléfinique polymérisable, de préférence un monomère anionique comprenant au moins une insaturation oléfinique polymérisable et au moins une fonction acide carboxylique,
- et (a2) d'au moins un ester d'un composé dérivé d'un acide carboxylique comprenant au moins une insaturation oléfinique polymérisable.

### Agents Anti-mousse

Les agents anti-mousses permettent de limiter la formation de mousse lors du procédé d'enrobage des fractions granulaires par le liant. Les agents anti-mousses peuvent être des composés de type PDMS (PolyDimethylSiloxane), organopolysiloxane, POA (polyoxyalkylene), une huile végétale ou des, particules polyamides.

### Dispersion de carbonate de calcium

Une dispersion de carbonate de calcium peut être ajoutée au liant afin de conférer des propriétés de rigidité et de renfort au liant. Une telle disperison de carbonate de calcium possède notamment un extrait sec compris entre 50 et 80%.

### Fibres

Les fibres sont par exemples choisies parmi les fibres cellulosiques, les fibres polyacrylonitriles et/ou des fibres de verre. L'ajout de fibres permet de limiter les coulures du liant à base de la dispersion aqueuse et d'améliorer la résistance à l'abrasion au jeune âge de l'enrobé résultant.

Selon un mode particulier de l'invention, l'enrobé peut également comprendre une quantité minoritaire de liant hydraulique en combinaison avec le liant clair selon l'invention. Par « quantité minoritaire », on entend que la teneur en liant hydraulique résiduel est inférieure ou égale à 2% par rapport au poids total de l'enrobé, de préférence inférieure à 1 %. Avantageusement, ledit liant hydraulique est choisi parmi le ciment Portland, la chaux, le lait de chaux, la magnésie, des composés calco-magnésiens synthétiques ou naturels tels que les dolomies, les chaux magnésiennes ou les chaux dolomitiques, des ciments de silicates ou d'aluminates de calcium et/ou de magnésium ou tout autre liant hydraulique bien connu de l'homme du métier.

L'ajout de liant hydraulique permet d'augmenter la rigidité du liant résiduel final, et donc du revêtement d'enrobés résultant, selon les usages prévus. L'ajout de liant hydraulique peut également diminuer le temps de prise de l'enrobé, c'est-à-dire le temps nécessaire pour que l'eau et éventuellement les solvants s'évapore(nt) du liant et que l'enrobé soit suffisamment consolidé et stable pour une mise sous trafic.

Le liant hydraulique peut être introduit soit lors du mélange des différents composants de l'enrobé, soit au préalable aux particules solides ou au liant en émulsion avant enrobage, sous réserve de la compatibilité et de la stabilité du liant hydraulique dans la dispersion aqueuse telle que définie ci-dessus. Préférablement, le liant hydraulique est ajouté aux particules solides avant mélange avec le liant.

En fonction des conditions climatiques, de l'état de sécheresse de la fraction minérales solide, de l'eau, dite eau d'apport, peut être ajoutée aux particules solides avant mélange au liant. La teneur totale en poids en eau des particules solides constituée de l'eau d'apport et de l'eau naturellement présente dans les particules solides, va par exemple de 1% à 6 % en poids par rapport au poids total des particules solides, typiquement la teneur en eau est de 4%.

Un éventuel séchage des particules solides peut être effectué si celles-ci contiennent une teneur en eau supérieur à 6% en poids par rapport au poids total des particules solides, afin d'atteindre une teneur en eau allant 1 et 6%, typiquement de 4%.

### Procédé de préparation des enrobés et caractéristiques

Le procédé de préparation des enrobés comprend le mélange des particules solides et du liant clair tels que définis ci-dessus, suivi d'une étape de séchage permettant l'évaporation de l'eau initialement présente dans le liant et les particules solides.

Dans la présente invention, le mélange des particules solides et du liant clair, ainsi que l'étape de séchage, se fait préférentiellement à froid, c'est-à-dire à une température allant de 15°C à 40°C. Dans un tel enrobage à froid, les particules solides ne sont pas préalablement séchées et sont mélangées avec leur humidité naturelle (plus un ajustement de la teneur en eau si nécessaire).

Les enrobés clairs selon l'invention sont déposés par répandage, par exemple avec un finisseur ou une niveleuse, puis compactés. Ces enrobés permettent une remise sous trafic inférieure à 72h, plus avantageusement dans les 24 heures après répandage. Typiquement, l'épandage des enrobés se fait également dans cette gamme de température à une température allant de 15°C à 40°C.

Préférablement, les enrobés selon la présente invention ont une teneur en vide inférieure à 35%, préférablement comprise dans une gamme allant de 5 à 30%, encore plus préférablement de 20 à 30%.

Les enrobés comprennent donc des particules solides telles que décrites ci-dessus et le liant résiduel issu du liant clair tel que défini ci-dessus. En d'autres termes, les enrobés comprennes des particules solides, des particules à base de PVB, des particules comprenant un polymère vinylique autre que le PVB, un tensioactif et éventuellement des additifs, tels que définis ci-dessus. La teneur en liant résiduel des enrobés est typiquement comprise dans une gamme allant de 1 à 20% en poids par rapport au poids total de l'enrobé, de préférence de 1,5 à 10% en poids, plus préférentiellement de 2,5 à 3,5% en poids. La quantité de liant au sein de l'enrobé pourra être ajustée en fonction de l'usage prévu des enrobés.

### Revêtement routier ou d'aménagement urbain

La présente invention concerne également un revêtement routier ou d'aménagement urbain, comprenant une ou plusieurs couches d'enrobés selon la présente invention.

Dans certains modes de réalisation, le revêtement selon la présente invention est une couche de chaussée claire particulièrement adaptée pour les voies peu circulées comme par exemple les voies piétonnes, les pistes cyclables, les places, les parvis, les aires de jeu, les terrains de sport et les voies vertes.

Le revêtement de l'invention peut comprendre en outre une couche de scellement par-dessus la ou les couche(s) d'enrobés, avantageusement appliquée entre 24h et 48h après la fin de la mise en œuvre des enrobés.

Par « couche de scellement », on entend une couche de liant projetée sur une couche de chaussée destinée à fixer les gravillons de surface (les roulants). En effet, le bon niveau de cohésion des enrobés garantit l'absence d'arrachement de gravillons et de sables. Le liant de la couche de scellement peut être tout liant clair adapté pour la préparation de revêtement routier.

Par exemple, la couche de scellement est constituée d'un liant résiduel issu du liant selon l'invention, tel que décrit ci-dessus.

La couche de scellement est préférablement appliquée à un dosage de 50 à 400 g/m² de liant résiduel.

### EXEMPLES

Pour tous les exemples ci-dessous, la teneur en liant anhydre résiduel total a été fixée à 3,15% en poids par rapport au poids total des particules solides.

La courbe granulométrique des particules solides est la suivante pour tous les exemples ci-dessous :

**[Table 1]**

| | | | | | | | | | |
|---|---|---|---|---|---|---|---|---|---|
| Tamis (mm) | 0,063 | 0,125 | 0,250 | 0,500 | 1 | 2 | 4 | 6,3 | 8 |
| Passants (%) | 4,0 | 4,9 | 6,9 | 9,3 | 14,6 | 25,2 | 57,6 | 94,0 | 100 |

Les liants testés sont les dispersions aqueuses ayant les compositions et propriétés suivantes :

**[Table 2]**

| Produit | Commentaire | Nature des particules de polymère | Température de transition vitreuse (Tg) | Teneur en particule en poids sec par rapport au poids du liant) |
|---|---|---|---|---|
| LT1* | Liant témoin | Cœur-écorce Esters (méth)acryliques et styrène | 4°C / 96°C | 50 % |
| LT2** | Liant témoin | Polybutyral de vinyle recyclé | 22°C | 48 % |
| LI1 | Liant selon l'invention | Mélange 70% LT1 + 30% LT2 | Non mesurée | 50 % |
| LI2 | Liant selon l'invention | Mélange 50% LT1 + 50% LT2 | Non mesurée | 49 % |

| | | | | |
|---|---|---|---|---|
| ** le liant témoin LT1 utilisé dans les exemples est un liant commercial de la société Celanese*^{®} *vendu sous la désignation commerciale Mowilith*^{®}*7416. Il comprend un tensioactif anionique.* ***Ie liant LT2 utilisé dans les exemples est un liant commercial de la société Shark Solutions^{®} vendu sous la désignation commerciale Shark Dispersion SX2. Il comprend un tensioactif anionique.* | | | | |

### Fabrication des enrobés

Dans chaque exemple ci-dessous, les particules solides ont été introduites dans un malaxeur, de l'eau a été ajoutée au mélange puis le liant en phase aqueuse a été introduit à la formulation. Après 20 secondes de malaxage, l'enrobé est compacté à l'aide d'une presse statique afin d'atteindre une teneur en vides de 20% dans les éprouvettes puis un mûrissement de 14 jours à 35°C/20% d'hygrométrie est réalisé.

### Propriétés mécaniques en compression diamétrale sinusoïdale

Les enrobés sont ensuite caractérisés par compressions diamétrales sinusoïdales afin d'obtenir l'angle de phase, ainsi que le module complexe des enrobés en fonction de la température et de la fréquence.

### Test de cohésion de surface

Un essai de cohésion superficielle de type test de Cohésion de Surface (TCS) issu de la norme NF EN 12274-5 peut être réalisé pour estimer la résistance à l'arrachement de surface de l'enrobé. Cet essai est réalisé après un temps de cure de l'enrobé de 72 heures à 20°C avant immersion dans l'eau. La perte de masse de l'enrobé est ensuite évaluée en pourcentage par rapport à la surface d'abrasion après une durée d'abrasion de 5 minutes.

### Exemple 1 : Formulation témoin n°1 (Liant LT1)

Un exemple de formulation d'enrobé à froid de référence avec des particules solides de taille 0/6 et le liant en phase aqueuse témoin LT1 est donné dans le tableau suivant :

**[Table 3]**

| Matériaux | % en poids |
|---|---|
| 2/6 Calcaire (%) | 55,3 |
| 0/4 Calcaire (%) | 36,9 |
| Eau d'apport (%) | 1,8 |
| LT1 (%) | 6,0 |

Afin de caractériser les propriétés mécaniques des enrobés obtenus, un mûrissement à 35°C/20% d'hygrométrie a été réalisé suite à la fabrication à froid des enrobés.

Les propriétés mécaniques en compression diamétrale sinusoïdale des enrobés obtenus à partir de cette formulation sont données dans le tableau suivant :

**[Table 4]**

| Isochrone 10 Hz | | |
|---|---|---|
| Température (°C) | Angle de phase (°) | E* (MPa) |
| -20 | 0,3 | 22940 |
| 0 | 1,2 | 20024 |
| 20 | 2,4 | 15407 |
| 40 | 2,7 | 12584 |
| 60 | 2,7 | 9985 |

### Exemple 2 : Formulation témoin n°2 (Liant LT2)

Un autre exemple de formulation d'enrobé à froid de référence avec des particules solides de taille 0/6 et le liant en phase aqueuse témoin LT2 est donné dans le tableau suivant :

**[Table 5]**

| Matériaux | % en poids |
|---|---|
| 2/6 Calcaire (%) | 55,3 |
| 0/4 Calcaire (%) | 36,9 |
| Eau d'apport (%) | 1,8 |
| LT2 (%) | 6,0 |

Les propriétés mécaniques en compression diamétrale sinusoïdale des enrobés obtenus à partir de cette formulation sont données dans le tableau suivant :

**[Table 6]**

| Isochrone 10 Hz | | |
|---|---|---|
| Température (°C) | Angle de phase (°) | E* (MPa) |
| -20 | 5,7 | 15847 |
| 0 | 4,2 | 14780 |
| 20 | 9,5 | 10143 |
| 40 | 22,4 | 3586 |
| 60 | 12,7 | 1222 |

Cet exemple démontre que l'utilisation d'une dispersion aqueuse comprenant des particules à base de polybutyral de vinyle recyclé seul amène à une forte susceptibilité thermique des propriétés mécaniques de l'enrobé, notamment à partir de 30-40°C. La très faible valeur de module complexe E* de cet enrobé à 60°C est incompatible avec la bonne tenue mécanique exigée de l'enrobé jusqu'à une plage de température allant de 40°C à 60°C, températures communes sur les revêtements en périodes estivales.

### Exemple 3 : Formulation selon l'invention n°1 (Liant LI1)

Un liant selon l'invention constitué d'un mélange 70% en poids de LT1 + 30% en poids de LT2 a été ensuite employé pour la formulation d'enrobés clairs à froid selon la composition suivante :

**[Table 7]**

| Matériaux | % en poids |
|---|---|
| 2/6 Calcaire (%) | 55,3 |
| 0/4 Calcaire (%) | 36,9 |
| Eau d'apport (%) | 1,8 |
| LI1 (%) | 6,0 |

Les propriétés mécaniques en compression diamétrale sinusoïdale des enrobés obtenus à partir de cette formulation sont données dans le tableau suivant :

**[Table 8]**

| Isochrone 10 Hz | | |
|---|---|---|
| Température (°C) | Angle de phase (°) | E* (MPa) |
| -20 | 1,3 | 22727 |
| 0 | 3,7 | 18423 |
| 20 | 4,4 | 15229 |
| 40 | 5,0 | 12653 |
| 60 | 9,9 | 7704 |

Cet exemple témoigne que l'utilisation d'une dispersion aqueuse comprenant des particules à base de PVB plastifié recyclé en combinaison avec des particules à base de polymères vinyliques autres que le PVB, dont l'un de ces polymères à une haute Tg (=96°C) permet l'obtention d'une forte valeur de module complexe E* à 40°C et une valeur de module acceptable à 60°C.

### Exemple 4 : Formulation selon l'invention n°2 (Liant LI2)

Un autre liant selon l'invention constitué d'un mélange 50% en poids de LT1 + 50% en poids de LT2 a été ensuite employé pour la formulation d'enrobés clairs à froid selon la composition suivante :

**[Table 9]**

| Matériaux | % en poids |
|---|---|
| 2/6 Calcaire (%) | 55,3 |
| 0/4 Calcaire (%) | 36,9 |
| Eau d'apport (%) | 1,8 |
| LI2 (%) | 6,0 |

Les propriétés mécaniques en compression diamétrale sinusoïdale des enrobés obtenus à partir de cette formulation sont données dans le tableau suivant :

**[Table 10]**

| Isochrone 10 Hz | | |
|---|---|---|
| Température (°C) | Angle de phase (°) | E* (MPa) |
| -20 | 1,8 | 20551 |
| 0 | 4,1 | 15430 |
| 20 | 4,3 | 13442 |
| 40 | 8,0 | 9930 |
| 60 | 16,9 | 4084 |

Cet exemple témoigne qu'un mélange équilibré de LT1 et LT2 (mélange 50%/50% en poids) permet tout de même l'obtention d'une forte valeur de module complexe E* à 40°C et une valeur de module acceptable à 60°C.

## Revendications

1. Liant clair comprenant de l'eau, un tensioactif anionique, des particules à base de polybutyral de vinyle (PVB) plastifié recyclé et des particules comprenant un polymère vinylique autre que le PVB, **caractérisé en ce qu'**au moins une partie des particules comprenant un polymère vinylique autre que le PVB sont constituées d'au moins deux polymères ayant des températures de transition vitreuse (Tg) distinctes, de sorte qu'un gradient positif de Tg est observé de la surface des particules vers le centre des particules.

2. Liant clair selon la revendication 1, dans lequel les particules à base de PVB plastifié recyclé comprennent un plastifiant choisi parmi les diesters d'acides carboxyliques du tri- ou du tétraéthylène glycol, le butylricinoléate, l'huile de ricin, les adipates mixtes d'alkyle et d'alkylaryle et un mélange de ceux-ci.

3. Liant clair selon la revendication 1 ou 2, dans lequel le polymère vinylique autre que le PVB est un polymère obtenu par polymérisation de monomères choisis parmi le styrène et ses dérivés, le butadiène, l'isoprène, les esters (méth)acryliques, les nitriles, les esters vinyliques, l'acide (méth)acrylique, l'acide itaconique, l'acide fumarique, l'acide maléique, l'acide crotonique, l'acide isocrotonique, l'acide vinylbenzoïque et leurs combinaisons.

4. Liant clair selon l'une quelconque des revendications 1 à 3, comprenant de 5% à 50% en poids de particules à base de PVB plastifié recyclé et/ou de 5% à 50% en poids de particules comprenant un polymère vinylique autre que le PVB, par rapport au poids total de liant.

5. Utilisation d'une dispersion aqueuse comprenant un tensioactif anionique, des particules à base de polybutyral de vinyle plastifié recyclé et des particules comprenant un polymère vinylique autre que le PVB, pour la préparation d'un liant destiné à la fabrication d'un enrobé routier ou d'aménagement urbain, au moins une partie des particules comprenant un polymère vinylique autre que le PVB étant constituées d'au moins deux polymères ayant des températures de transition vitreuse (Tg) distinctes, de sorte qu'un gradient positif de Tg est observé de la surface des particules vers le centre des particules.

6. Enrobés clairs routiers ou pour aménagement urbain comprenant des particules solides et un liant résiduel issu du liant défini dans l'une quelconque des revendications 1 à 4.

7. Enrobés clairs selon la revendication 6, **caractérisés en ce que** la teneur en liant résiduel est comprise dans une gamme allant de 1 à 20% en poids par rapport au poids total de l'enrobé, de préférence de 1,5 à 10% en poids, plus préférentiellement de 2,5 à 3,5% en poids.

8. Enrobés clairs selon la revendication 6 ou 7, comprenant en outre un additif choisi parmi les plastifiants, les tensioactifs non-ioniques, les dopes d'adhésion, les agents colorants, les agents anti-mousse, les agents viscosifiants, les agents antimicrobiens, les dispersions de carbonate de calcium, les fibres et une combinaison de ceux-ci.

9. Revêtement routier ou d'aménagement urbain comprenant une ou plusieurs couches d'enrobés tels que définis dans l'une quelconque des revendications 6 à 8.

## Patentansprüche

1. Ein klares Bindemittel, das Wasser, ein anionisches Tensid, Partikel auf der Basis von recyceltem, plastifiziertem Polyvinylbutyral (PVB) und Partikel umfasst, die ein anderes Vinylpolymer als PVB enthalten, **dadurch gekennzeichnet, dass** bei mindestens zumindest einige der Partikel, die ein anderes Vinylpolymer als PVB enthalten, aus mindestens zwei Polymeren mit unterschiedlichen Glasübergangstemperaturen (Tg) bestehen, sodass ein positiver Gradient der Tg von der Oberfläche der Partikel zum Zentrum der Partikel hin beobachtet wird .

2. Ein klares Bindemittel nach Anspruch 1, wobei die Partikel auf der Basis von recyceltem plastifiziertem PVB einen Weichmacher umfassen, der aus Diestern von Carbonsäuren von Tri- oder Tetraethylenglykol, Butylricinoleat, Rizinusöl, gemischten Alkyl- und Alkylaryladipaten und einer Mischung davon ausgewählt ist.

3. Ein klares Bindemittel gemäß Anspruch 1 oder 2, wobei das andere Vinylpolymer als PVB ein Polymer ist, das durch Polymerisation von Monomeren erhalten wird, die aus Styrol und dessen Derivaten, Butadien, Isopren, (Meth)acrylsäureestern, Nitrilen, Vinylestern, (Meth)acrylsäure, Itaconsäure, Fumarsäure, Maleinsäure, Crotonsäure, Isocrotonsäure, Vinylbenzoesäure und Kombinationen davon.

4. Ein klares Bindemittel gemäß einem der Ansprüche 1 bis 3, das 5 bis 50 Gew.-% Partikel auf der Basis von recyceltem plastifiziertem PVB und/oder 5 bis 50 Gew.-% Partikel, die ein anderes Vinylpolymer als PVB umfassen, bezogen auf das Gesamtgewicht des Bindemittels, umfasst.

5. Verwendung einer wässrigen Dispersion, die ein anionisches Tensid, Partikel auf Basis von recyceltem plastifiziertem Polyvinylbutyral und Partikel, die ein anderes Vinylpolymer als PVB enthalten , umfasst, zur Herstellung eines Bindemittels, das für die Herstellung von Straßenbelägen oder städtischer Infrastruktur bestimmt ist, wobei zumindest einige der Partikel, die ein anderes Vinylpolymer als PVB enthalten, aus mindestens zwei Polymeren mit unterschiedlichen Glasübergangstemperaturen (Tg) bestehen, sodass von der Oberfläche der Partikel zum Zentrum der Partikel hin ein positiver Tg-Gradient beobachtet wird.

6. Helle Asphaltmischungen für Straßen oder den Städtebau, umfassend feste Partikel und ein Restbindemittel, das von dem in einem der Ansprüche 1 bis 4 definierten Bindemittel abgeleitet ist.

7. Helle Asphaltmischungen gemäß Anspruch 6, **dadurch gekennzeichnet, dass** der Restbindemittelgehalt im Bereich von 1 bis 20 Gew.-%, bezogen auf das Gesamtgewicht der Asphaltmischung, vorzugsweise 1,5 bis 10 Gew.-%, noch bevorzugter 2,5 bis 3,5 Gew.-%, liegt.

8. Helle Asphaltmischungen gemäß Anspruch 6 oder 7, die ferner einen Zusatzstoff umfassen, der aus Weichmachern, nichtionischen Tensiden, Haftvermittlern, Farbstoffen, Antischaummitteln, Viskositätserhöhern, antimikrobiellen Mitteln, Calciumcarbonat-Dispersionen, Fasern und einer Kombination davon ausgewählt ist.

9. Straßen- oder städtische Infrastrukturbeläge, die eine oder mehrere Schichten aus Asphaltmischungen gemäß einem der Ansprüche 6 bis 8 umfassen.

## Claims

1. A clear binder comprising water, an anionic surfactant, particles based on recycled plasticised polyvinyl butyral (PVB) and particles comprising a vinyl polymer other than PVB, **characterised in that** at least some of the particles comprising a vinyl polymer other than PVB consist of at least two polymers having distinct glass transition temperatures (Tg), such that a positive gradient of Tg is observed from the surface of the particles towards the centre of the particles .

2. A clear binder according to claim 1, wherein the particles based on recycled plasticised PVB comprise a plasticiser selected from diesters of carboxylic acids of tri- or tetraethylene glycol, butyl ricinoleate, castor oil, mixed alkyl and alkylaryl adipates, and a mixture thereof.

3. A clear binder according to claim 1 or 2, wherein the vinyl polymer other than PVB is a polymer obtained by polymerisation of monomers selected from styrene and its derivatives, butadiene, isoprene, (meth)acrylic esters, nitriles, vinyl esters, (meth)acrylic acid, itaconic acid, fumaric acid, maleic acid, crotonic acid, isocrotonic acid, vinylbenzoic acid and combinations thereof.

4. A clear binder according to any one of claims 1 to 3, comprising from 5% to 50% by weight of particles based on recycled plasticised PVB and/or from 5% to 50% by weight of particles comprising a vinyl polymer other than PVB, based on the total weight of the binder.

5. Use of an aqueous dispersion comprising an anionic surfactant, particles based on recycled plasticised polyvinyl butyral and particles comprising a vinyl polymer other than PVB, for the preparation of a binder intended for the manufacture of an asphalt mix for roads or for urban infrastructure, at least some of the particles comprising a vinyl polymer other than PVB being composed of at least two polymers having distinct glass transition temperatures (Tg), such that a positive Tg gradient is observed from the surface of the particles towards the centre of the particles.

6. Light-coloured asphalt mixes for roads or urban development comprising solid particles and a residual binder derived from the binder defined in any one of claims 1 to 4.

7. Light-coloured asphalt mixes according to claim 6, **characterised in that** the residual binder content is in the range of 1 to 20% by weight relative to the total weight of the asphalt mix, preferably 1.5 to 10% by weight, more preferably 2.5 to 3.5% by weight.

8. Light-coloured asphalt mixes according to claim 6 or 7, further comprising an additive selected from plasticisers, non-ionic surfactants, adhesion promoters, colouring agents, anti-foaming agents, viscosity-increasing agents, antimicrobial agents, calcium carbonate dispersions, fibres and a combination thereof.

9. A road or urban infrastructure surfacing comprising one or more layers of asphalt mixes as defined in any one of claims 6 to 8.
